# EUROPEAN PATENT SPECIFICATION

(11) **EP 2 553 912 B1**
(45) Date of publication and mention of the grant of the patent: **25.03.2015**
(21) Application number: 11718482.0
(22) Date of filing: 24.02.2011
(51) Int. Cl.: H04M 1/02, H05K 5/06, H04M 1/18

(54) **PROTECTIVE GASKET FOR DISPLAY MODULE OF PORTABLE ELECTRONIC DEVICE AND METHOD FOR ASSEMBLING THE DEVICE**
SCHUTZDICHTUNG FÜR EIN ANZEIGEMODUL EINER TRAGBAREN ELEKTRONISCHEN VORRICHTUNG UND MONTAGEVERFAHREN DAFÜR
JOINT DE PROTECTION POUR MODULE D'AFFICHAGE DE DISPOSITIF ÉLECTRONIQUE PORTABLE ET PROCÉDÉ D'ASSEMBLAGE DU DISPOSITIF

(30) Priority: 20.08.2010 US 860057; 31.03.2010 CN 201010389589
(43) Date of publication of application: 06.02.2013
(73) Proprietor: Sony Ericsson Mobile Communications AB, 221 88 Lund (SE)
(72) Inventor: KONG, Zhenyu, Beijing 100102 (CN); QIAN, Yiya, Beijing 100102 (CN)
(74) Representative: Banzer, Hans-Jörg
(86) International application number: PCT/IB2011/000396
(87) International publication number: WO 2011/121403

(56) References cited:
- JP-A- 61 137 494
- US-A1- 2006 140 439
- US-A1- 2009 262 424

## Description

### FIELD OF THE INVENTION

The present invention relates to a protective gasket for a display of a portable electronic device, and more particularly, to a flexible gasket to be disposed between a housing and a display module such as a liquid crystal display (LCD) module for protecting the display module, a portable electronic device including the flexible gasket and a method for assembling the portable electronic device.

### BACKGROUND OF THE INVENTION

Presently various portable electronic devices, such as mobile phone, MP4 and personal digital assistant (PDA), are more and more popular due to their increasing functions. These portable electronic devices are also thinner and thinner for the convenience of carrying carriage by people.

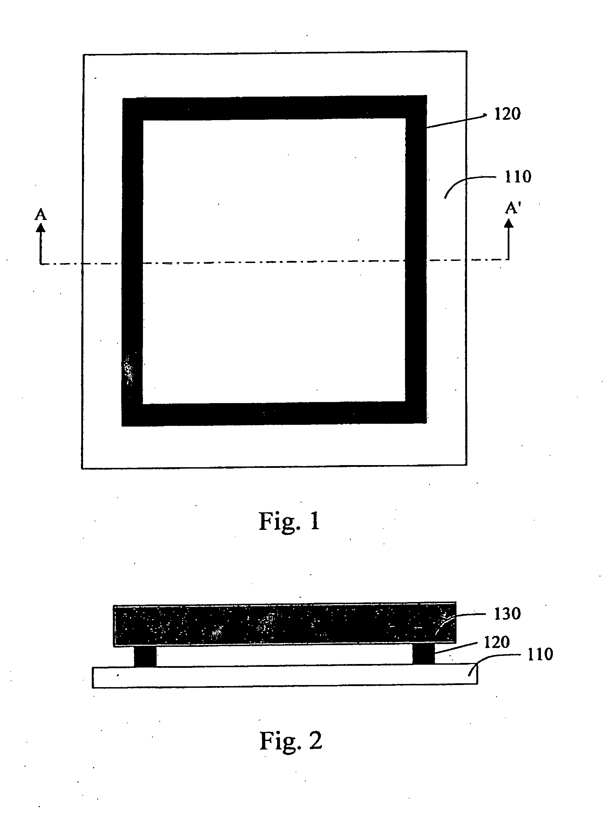

For example, in a current mobile phone, a gasket is usually disposed between a housing and a display module such as an LCD module to avoid any damage to the display module caused by a collision, e.g., as by bumping, dropping, hitting, hard pressing, and so on. As illustrated in Fig. 1, a transparent protective film 110 on the housing is adhered with a gasket 120 having a certain thickness. Thus, when a main body of the mobile phone having the display module is mounted with the housing together, the gasket 120 is disposed between the transparent protective film 110 and the LCD module 130 to serve as a cushion material, as illustrated in Fig. 2. Fig. 2 is a section diagram taken along line A-A' of Fig. 1.

It shall be particularly pointed out that Figs. 1 and 2 only schematically illustrate portions related to a gasket mounting arrangement.

In such an arrangement, the gasket 120 occupies a part of the entire thickness of the mobile phone, which is a negative factor for a design that intends to reduce the thickness. In addition, the gasket 120 can only avoid the damage to the LCD module caused by a collision perpendicular to the display surface of the LCD module, while it cannot protect the side surfaces of the LCD module.

A portable electronic device according to the preamble of independent claim 1 is known from US 2009/262424 A1.

Furthermore, JP 61-137494 A discloses a flexible gasket that may be disposed between a housing frame and a display module of a portable electronic device to protect the display module. The flexible gasket is shaped into a hollow rectangle.

### SUMMARY OF THE INVENTION

The present invention provides a portable electronic device as defined in independent claim 1. The dependent claims define preferred and/or advantageous embodiments of the invention.

According to an aspect of the invention, as the inner edges of the flexible gasket can be bent after the portable electronic device is assembled, the thickness of the portable electronic device can be reduced, and the side periphery of the display module can be protected.

According to another aspect of the invention, the display module of the portable electronic device can be protected better from being intruded by foreign matters such as dust and moisture.

These and further aspects and features of the present invention will be apparent with reference to the following description and attached drawings. In the description and drawings, particular embodiments of the invention have been described in detail as being indicative of some of the ways in which the principles of the invention may be employed, but it is appreciated that the invention is not limited thereto in scope.

Features that are described and/or illustrated with respect to one embodiment may be used in the same way or in a similar way in one or more other embodiments and/or in combination with or instead of the features of the other embodiments.

It should be emphasized that the term "include(s)/including" and "comprise(s)/comprising" when used in this specification is taken to specify the presence of stated features, integers, steps or components but does not preclude the presence or addition of one or more other features, integers, steps, components or groups thereof.

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

### BRIEF DESCRIPTION OF THE DRAWINGS

The drawings are included to provide further understanding of the present invention, which constitute a part of the specification and illustrate embodiments of the present invention, and are used for setting forth the present invention together with the description. The same element is represented with the same reference number throughout the drawings.

In the drawings:
Fig. 1 is a plan view that illustrates a display window protective film to which a conventional LCD module gasket is attached;
Fig. 2 is a sectional view taken along Line A-A' in Fig. 1 and illustrating the overlapping relations between the LCD module, the gasket and the display window protective film after the device is assembled;
Fig. 3 is a plan view that illustrates the structure of a protective gasket for an LCD module according to an embodiment of the present invention; and
Fig. 4A-4F are views that illustrate respective assembly phases according to an embodiment of the present invention.

### DESCRIPTION

The interchangeable terms "electronic apparatus" and "electronic device" include portable radio communication apparatus. The term "portable radio communication apparatus", which hereinafter is referred to as a "mobile terminal", "portable electronic device", or "portable communication device", includes all apparatuses such as mobile telephones, pagers, communicators, electronic organizers, personal digital assistants (PDAs), smart phones, portable communication devices or the like.

In the present application, embodiments of the invention are described primarily in the context of a portable electronic device in the form of a mobile telephone (also referred to as "mobile phone"). However, it shall be appreciated that the invention is not limited to the context of a mobile telephone and may relate to any type of appropriate electronic apparatus.

The present invention is described as follows in reference to the drawings.

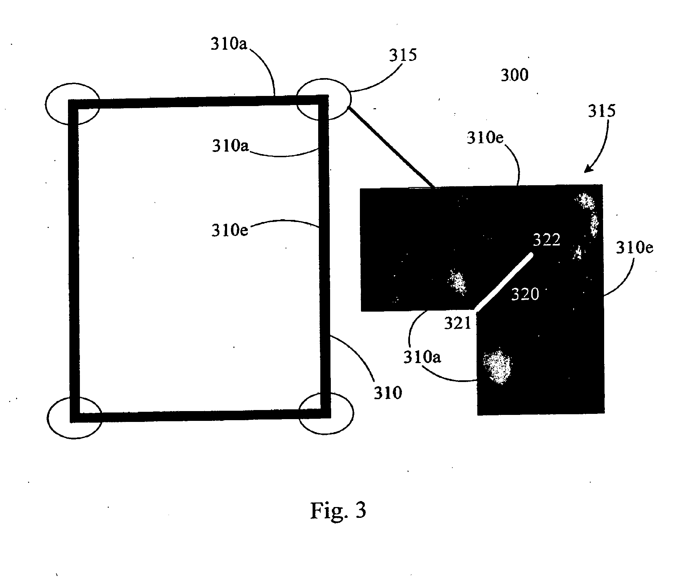

Fig. 3 is a plan view 300 that illustrates a flexible gasket 310 for a display module (for example, an LCD module) for use in a mobile phone according to an embodiment of the present invention. The right portion in the view is an enlarged view of a corner portion 315 of the flexible gasket 310, which is shown in the left portion of the drawing surrounded with an elliptical mark. The other corner portions of the flexible gasket 310 also are shown by elliptical markings and may be similar to the corner portion that is illustrated at 315. Herein, the description is made with the LCD module as an example. However, it is appreciated that the invention is not limited thereto. For example, the invention may also be applicable to a mobile phone including an LED module or some other type of display module.

As illustrated in Fig. 3, the flexible gasket 310 is generally in a hollow (or annular) rectangular shape, for example, and has a cut portion 320 at each of the four corner portions thereof similar to the corner portion 315.As an example, the flexible gasket 310 is formed with a flexible foam material, and an adhesive is applied to one side of the flexible gasket 310 so as to adhere the flexible gasket 310 to the housing frame of the mobile phone.

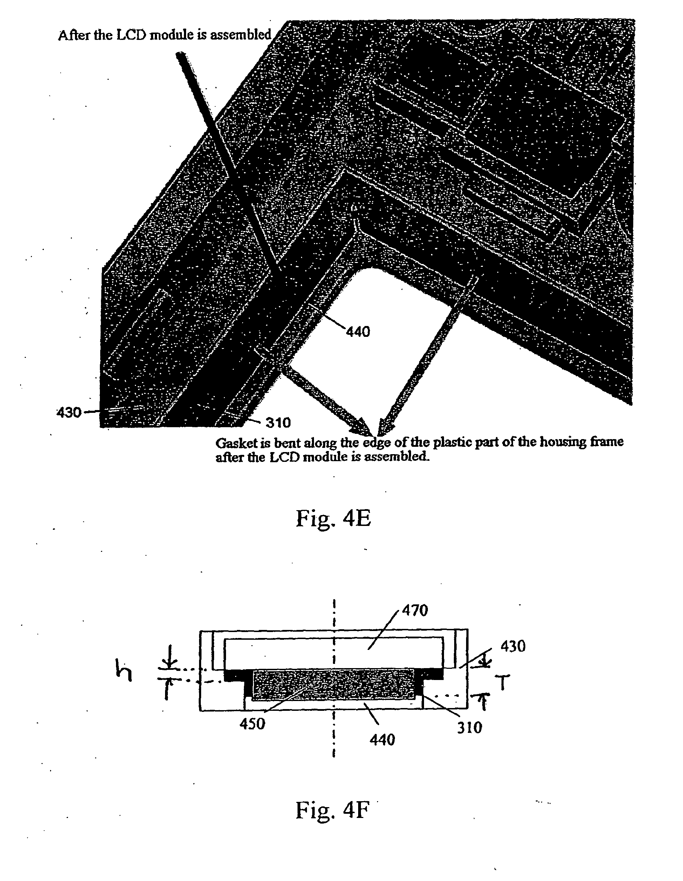

The cut portion 320 may be formed by partially cutting the corner portion 315 in a diagonal direction relative to the right angle or other angle junction of adjacent extending lengths 310a, e.g., arms or sides, of the flexible gasket 310. Although the cut portion 320 shown in the drawing is a simple cut slit (e.g., a linear cut portion), a cut portion of a different shape (e.g., curved shape) may also be possible as may be desired. The slit width of the cut slit 320 can be provided so that two inner edges adjacent to the cut slit 320 can be easily bent, for example, the slit width may be corresponding to that of the flexible gasket 310, e.g., corresponding to the installed axial thickness or length "T" of the flexible gasket in the direction of axis A shown in Fig. 4F. The cut slit 320 extends from an inner corner point 321 of the corner portion 315 to a position 322 in the diagonal direction. The position 322 is positioned so that the bending amount of the inner edge of the flexible gasket 310 is corresponding to a predetermined length after the mobile phone is assembled, e.g., the predetermined length is determined based on a side mounting height of the LCD module of the mobile phone, and preferably, may be substantially equal to the side mounting height of the LCD module.

Thus, after the flexible gasket 310 is disposed onto a display window portion of the housing frame of the mobile phone, and the LCD module of the mobile phone is embedded into the display window portion of the housing frame, the inner edge 310e of the flexible gasket 310 which is corresponding to the cut slit portion 320 will be bent, and then compressed and fitted between the outer periphery of the LCD module and the inner periphery of the display window portion.

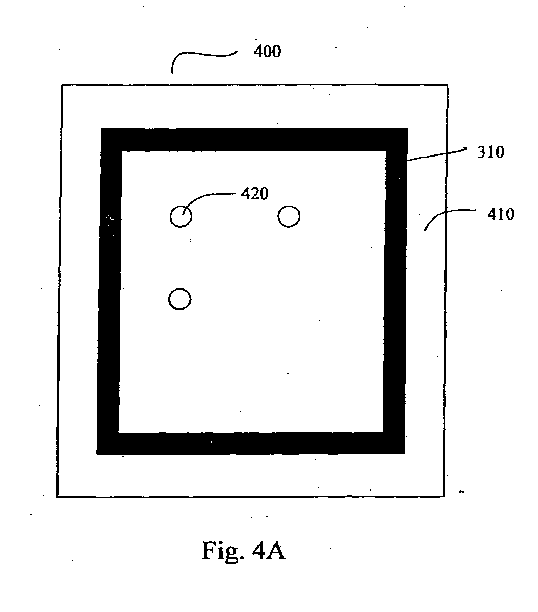

Various assembly phases of the mobile phone according to an embodiment of the present invention are described as follows in reference to Figs. 4A-4F.

Fig. 4A is a plan view that illustrates an example of a prepared flexible gasket mounting assembly. The flexible gasket mounting assembly 400 includes a carrying substrate 410 and a flexible gasket 310 adhered thereto as illustrated in Figs. 1 and 2. The carrying substrate 410 may be provided with a plurality of (for example, in this embodiment is 3, but not limited thereto) locating holes 420 for locating during the assembly procedure. Due the assembling operation, for example, the locating holes 420 can be utilized by a robot to grasp the flexible gasket mounting assembly 400 and align it with a housing frame to be assembled. For example, the carrying substrate 410 may be made of a transparent plastic film. An adhesive for bonding the carrying substrate 410 with the flexible gasket 310 thereon may be initially applied on the carrying substrate 410, or initially applied on the flexible gasket 310. The other side of the flexible gasket 310 is applied with adhesive to adhere the flexible gasket 310 to the housing frame of the mobile phone. In an embodiment the bonding force of the adhesive between the carrying substrate 410 and the flexible gasket 310 is smaller than that between the other side of the flexible gasket 310 and the housing frame of the mobile phone, so that the carrying substrate 410 can be removed after the flexible gasket 310 is attached to the housing frame.

Furthermore, the flexible gasket 310 herein has been formed with the cut portions 320 before being attached to the carrying substrate 410. Alternatively, cut portions of a predetermined shape may be formed by cutting the flexible gasket 310 and the carrying substrate 410 after the flexible gasket 310 is attached to the carrying substrate 410.

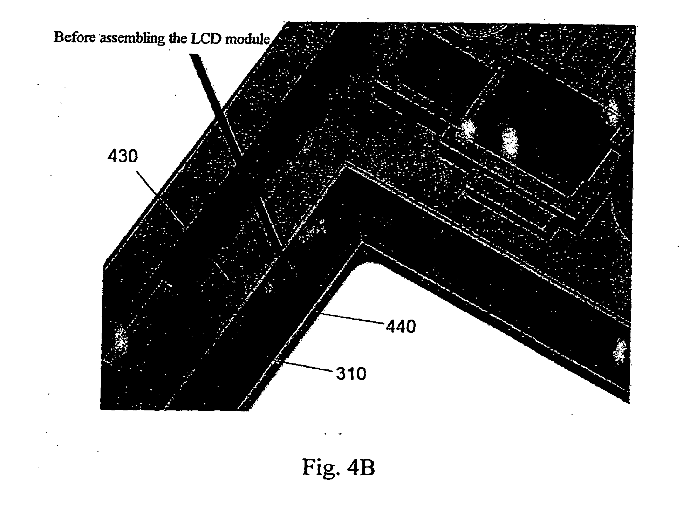

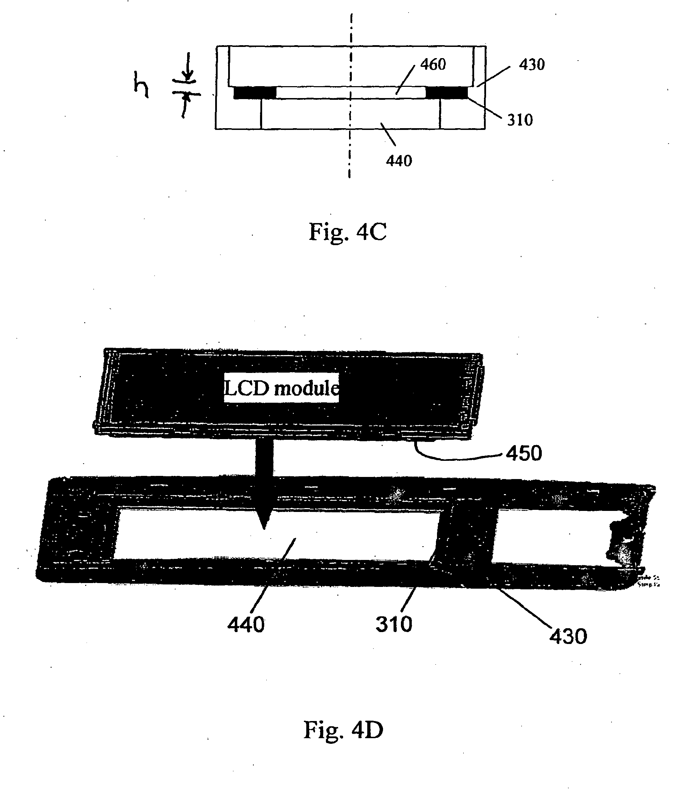

Fig. 4B illustrates a diagram in a state that the flexible gasket 310 is attached to a housing frame 430 of the mobile phone and before the LCD module is assembled. The flexible gasket mounting assembly 400 (Fig. 4A) is aligned and pressed towards a display window portion 440 included in the housing frame 430, in a way that the flexible gasket 310 side faces the housing frame 430 of the mobile phone, so that the flexible gasket 310 is bonded to corresponding position of the display window portion 440. Subsequently, the carrying substrate 410 is removed and only the flexible gasket 310 is left at the display window portion 440 of the housing frame 430. Fig. 4C illustrates a sectional view taken along the transverse direction of the mobile phone in such assembly state. As shown in Fig. 4C, the housing frame 430 includes a concave portion 460 for accommodating the flexible gasket 310, and the step height "h" of the concave portion 460 may be corresponding to thickness of the flexible gasket 310, for example. Alternatively, the concave portion 460 may also hot to be provided.

Next, as illustrated in Fig. 4D, a main body of the mobile phone including an LCD module 450 is attached to the housing frame 430, so that the LCD module 450 is embedded into the display window portion 440 of the housing frame 430.

As illustrated in Fig. 4E, after the LCD module 450 is assembled, since the flexible gasket 310 has the cut portion at each corner portion, each inner edge of the flexible gasket 310 will be bent and then compressed and fitted between the outer periphery of the LCD module 450 and the inner periphery of the display window portion 440.

Fig. 4F is a sectional view illustrating the relationship of the positions among the LCD module 450, the bent flexible gasket 310 and the display window portion 440 in the housing frame 430 of the mobile phone in the assembling state. As mentioned above, this drawing is not depicted to scale in accordance with the dimension of real components and shows no further structural feature of the mobile phone. The drawing is made to show the relationship of the positions of the components related to the embodiments of the invention. In the drawing, reference number "470" is utilized to indicate a circuit board portion integrated with the LCD module 450 of the mobile phone.

Compared to the conventional gasket, the flexible gasket 310 of the invention disposed between the housing frame 430 and the LCD module 450 does not need to occupy the entire width of the mobile phone, which is beneficial to reduce the thickness of the mobile phone, and can provide protection to the side periphery of the LCD module 450, since its inner edges can be bent.

In addition, with the present invention, the LCD module of the portable electronic device can be protected better from being intruded by foreign matters such as dust and moisture.

The many features and advantages of the embodiments are apparent from the detailed specification. Further, since numerous modifications and changes will readily occur to those skilled in the art, it is not desired to limit the inventive embodiments to the exact construction and operation illustrated and described.

## Claims

1. A portable electronic device, comprising
a housing frame (430),
a main body having a display module (450), and
a flexible gasket (310) disposed between the housing frame (430) and the main body, the housing frame (430) having a display window portion (440) corresponding to the display module (450), **characterized in that**
the flexible gasket (310) has a cut portion (320) at each of corner portions (315) thereof, so that each of inner edges (310e) of the flexible gasket (310) is bent as the display module (450) is embedded into the display window portion (440), and then compressed and fitted between the outer periphery of the display module (450) and the inner periphery of the display window portion (440).

2. The portable electronic device according to claim 1, wherein the cut portion (320) at each of the corner portions (315) of the flexible gasket (310) is a linear cut portion that extends from the inner corner point (321) of the corner portion (315) to a position (322) in the diagonal direction, so that an amount by which the inner edge (310e) of the flexible gasket (310) is bent is corresponding to a predetermined length.

3. The portable electronic device according to claim 2, wherein the predetermined length corresponding to the amount by which the inner edge (310e) of the flexible gasket (310) is bent is determined based on a side mounting height of the display module (450).

4. The portable electronic device according to any one of claims 1-3, wherein, the housing frame (430) comprises a concave portion (460) for accommodating the flexible gasket (310), and the step height (h) of the concave portion (460) is corresponding to the thickness of the flexible gasket (310).

5. The portable electronic device according to any one of claims 1-4, wherein the portable electronic device is a mobile phone.

6. A method for assembling a portable electronic device, including a housing frame (430) and a main body having a display module (450) of the portable electronic device, the housing frame (430) having a display window portion (440) corresponding to the display module (450); comprising
preparing a flexible gasket mounting assembly (400) that comprises a carrying substrate (410) and a flexible gasket (310) adhered thereto, the flexible gasket (310) having a cut portion (320) at each of corner portions (315) thereof;
aligning and pressing the flexible gasket mounting assembly (400) towards the display window portion (440) included in the housing frame (430), in a way that the flexible gasket (310) faces the housing frame (430), so that the flexible gasket (310) is bonded to corresponding position of the display window portion (440), and subsequently removing the carrying substrate (410); and
attaching the main body onto the housing frame (430) so as to embed the display module (450) into the display window portion (440) included in the housing frame (430), so that each of the inner edges (310e) of the flexible gasket (310) is bent and compressed and fitted between the outer periphery of the display module (450) and the inner periphery of the display window portion (440).

7. The method according to claim 6, wherein the process of preparing the flexible gasket mounting assembly (400) comprises:
providing the carrying substrate (410); and
adhering a rectangular flexible gasket (310) onto the carrying substrate (410), and
cutting a cut portion (320) at each of the four corner portions (315) of the flexible gasket (310) along a diagonal direction.

8. The method according to claim 7, wherein the cut portion (320) is a linear cut portion, which is formed by cutting the flexible gasket (310) over a portion extending from the inner corner point (321) of the respective corner portion (315) to a position (322) in the diagonal direction, which is positioned so that an amount by which the inner edge (310e) of the flexible gasket (310) is bent is corresponding to a predetermined length.

9. The method according to claim 8, wherein the predetermined length corresponding to the amount by which the inner edge (310e) of the flexible gasket (310) is bent is determined based on a side mounting height of the display module (450).

## Patentansprüche

1. Tragbare elektronische Vorrichtung, umfassend
einen Gehäuserahmen (430),
einen Hauptkörper mit einem Anzeigemodul (450), und
eine flexible Dichtung (310), die zwischen dem Gehäuserahmen (430) und dem Hauptkörper angeordnet ist, wobei
der Gehäuserahmen (430) einen Anzeigefensterabschnitt (440) aufweist, der dem Anzeigemodul (450) entspricht, **dadurch gekennzeichnet, dass** die flexible Dichtung (310) einen Einschnittabschnitt (320) an jedem Eckabschnitte (315) hat, so dass jede innere Ecke (310e) der flexiblen Dichtung (310) gebogen wird, wenn das Anzeigemodul (450) in dem Anzeigefensterabschnitt (440) eingebettet wird, und dann komprimiert und zwischen der äußeren Peripherie des Anzeigemoduls (450) und der inneren Peripherie des Anzeigefensterabschnitts (440) eingepasst wird.

2. Tragbare elektronische Vorrichtung nach Anspruch 1, wobei der Einschnittabschnitt (320) an jedem der Eckabschnitte (315) der flexiblen Dichtung (310) ein linearer Einschnittabschnitt ist, der sich von dem inneren Eckpunkt (321) des Eckabschnitts (315) zu einer Position (322) in der diagonalen Richtung erstreckt, so dass ein Betrag, um den die innere Ecke (310e) der flexiblen Dichtung (310) gebogen wird, einer vorbestimmten Länge entspricht.

3. Tragbare elektronische Vorrichtung nach Anspruch 2, wobei die vorbestimmte Länge, die dem Betrag entspricht, um den die innere Ecke (310e) der flexiblen Dichtung (310) gebogen wird, basierend auf einer seitlichen Montagehöhe des Anzeigemoduls (450) bestimmt ist.

4. Tragbare elektronische Vorrichtung nach einem der Ansprüche 1 bis 3, wobei der Gehäuserahmen (430) einen konkaven Abschnitt (460) zur Unterbringung der flexiblen Dichtung (310) umfasst, und die Schritthöhe (h) des konkaven Abschnitts (460) der Dicke der flexiblen Dichtung (310) entspricht.

5. Tragbare elektronische Vorrichtung nach einem der Ansprüche 1-4, wobei die tragbare elektronische Vorrichtung ein mobiles Telefon ist.

6. Verfahren zur Montage einer tragbaren elektronischen Vorrichtung, die einen Gehäuserahmen (430) und einen Hauptkörper mit einem Anzeigemodul (450) der tragbaren elektronischen Vorrichtung enthält, wobei der Gehäuserahmen (430) einen Anzeigefensterabschnitt (440) aufweist, der dem Anzeigemodul (450) entspricht; umfassend
Vorbereiten einer Montagebaugruppe für eine flexible Dichtung (400), die ein Trägersubstrat (410) und eine flexible Dichtung (310), die daran anhaftet, umfasst, wobei die flexible Dichtung (310) einen Einschnittabschnitt (320) an jedem Eckabschnitt (315) davon aufweist;
Ausrichten und Pressen der Montagebaugruppe für eine flexible Dichtung (400) in Richtung des Anzeigefensterabschnitts (440), der in dem Gehäuserahmen (430) enthalten ist, derart, dass die flexible Dichtung dem Gehäuserahmen (430) gegenüber liegt, so dass die flexible Dichtung (310) an eine entsprechende Position des Anzeigefensterabschnitts (440) gebunden ist, und anschließend Entfernen des Trägersubstrats (410); und
Anbringen des Hauptkörpers auf den Gehäuserahmen (430), so dass das Anzeigemodul (450) in dem Anzeigefensterabschnitt (440), der in dem Gehäuserahmen (430) enthalten ist, eingebettet ist, so dass jede innere Ecke (310e) der flexiblen Dichtung (310) gebogen und zusammengepresst und zwischen die äußere Peripherie des Anzeigemoduls (450) und der inneren Peripherie des Anzeigefensterabschnitts (440) eingepasst wird.

7. Verfahren nach Anspruch 6, wobei der Prozess des Vorbereitens der Montagebaugruppe für eine flexible Dichtung (400) umfasst:
Bereitstellen des Trägersubstrats (410); und
Anhaften einer rechteckigen flexiblen Dichtung (310) auf dem Trägersubstrats (410), und
Schneiden eines Einschnittabschnitts (320) an jedem der vier Eckabschnitte (315) der flexiblen Dichtung (310) entlang einer diagonalen Richtung.

8. Verfahren nach Anspruch 7, wobei der Einschnittabschnitt (320) ein linearer Einschnittabschnitt ist, der dadurch ausgebildet wird, dass die flexible Dichtung (310) über einen Abschnitt geschnitten wird, der sich vom inneren Eckpunkt (321) des entsprechenden Eckabschnitts (315) zu einer Position (322) in der diagonalen Richtung erstreckt, die so positioniert ist, dass ein Betrag, um den die innere Ecke (310e) der flexiblen Dichtung (310) gebogen wird, einer vorbestimmten Länge entspricht.

9. Verfahren nach Anspruch 8, wobei die vorbestimmte Länge, die dem Betrag entspricht, um den die innere Ecke (310e) der flexiblen Dichtung (310) gebogen wird, basierend auf einer seitlichen Montagehöhe des Anzeigemoduls (450) bestimmt wird.

## Revendications

1. Dispositif électronique portable comprenant :
un bâti de boîtier (430),
un corps principal ayant un module d'affichage (450), et
un joint flexible (310) disposé entre le bâti de boîtier (430) et le corps principal, le bâti de boîtier (430) ayant une partie de fenêtre d'affichage (440) correspondant au module d'affichage (450), **caractérisé en ce que** :
le joint flexible (310) a une partie découpée (320) au niveau de chacune de ses parties de coin (315) de sorte que chacun des bords internes (310e) du joint flexible (310) est plié lorsque le module d'affichage (450) est encastré dans la partie de fenêtre d'affichage (440) et ensuite comprimé et monté entre la périphérie externe du module d'affichage (450) et la périphérie interne de la partie de fenêtre d'affichage (440).

2. Dispositif électronique portable selon la revendication 1, dans lequel la partie découpée (320) au niveau de chacune des parties de coin (315) du joint flexible (310) est une partie découpée linéaire qui s'étend à partir de la pointe de coin interne (321) de la partie de coin (315) jusqu'à une position (322) dans la direction diagonale, de sorte qu'une quantité selon laquelle le bord interne (310e) du joint flexible (310) est plié, correspond à une longueur prédéterminée.

3. Dispositif électronique portable selon la revendication 2, dans lequel la longueur prédéterminée correspondant à la quantité selon laquelle le bord interne (310e) du joint flexible (310) est plié, est déterminée en fonction d'une hauteur de montage latérale du module d'affichage (450).

4. Dispositif électronique portable selon l'une quelconque des revendications 1 à 3, dans lequel le bâti de boîtier (430) comprend une partie concave (460) pour loger le joint flexible (310), et la hauteur d'échelon (h) de la partie concave (460) correspond à l'épaisseur du joint flexible (310).

5. Dispositif électronique portable selon l'une quelconque des revendications 1 à 4, le dispositif électronique portable étant un téléphone mobile.

6. Procédé pour assembler un dispositif électronique portable comprenant un bâti de boîtier (430) et un corps principal ayant un module d'affichage (450) du dispositif électronique portable, le bâti de boîtier (430) ayant une partie de fenêtre d'affichage (440) correspondant au module d'affichage (450), comprenant les étapes consistant à :
préparer un ensemble de montage de joint flexible (400) qui comprend un substrat de support (410) et un joint flexible (310) fixé à ce dernier, le joint flexible (310) ayant une partie découpée (320) au niveau de chacune de ses parties de coin (315) ;
aligner et comprimer l'ensemble de montage de joint flexible (400) vers la partie de fenêtre d'affichage (440) comprise dans le bâti de boîtier (430), de sorte que le joint flexible (310) fait face au bâti de boîtier (430), de sorte que le joint flexible (310) est relié à la position correspondante de la partie de fenêtre d'affichage (440), et retirer consécutivement le substrat de support (410) ; et
fixer le corps principal sur le bâti de boîtier (430) afin d'encastrer le module d'affichage (450) dans la partie de fenêtre d'affichage (440) comprise dans le bâti de boîtier (430), de sorte que chacun des bords internes (310e) du joint flexible (310) est plié et comprimé et monté entre la périphérie externe du module d'affichage (450) et la périphérie interne de la partie de fenêtre d'affichage (440).

7. Procédé selon la revendication 6, dans lequel le processus consistant à préparer l'ensemble de montage de joint flexible (400) comprend les étapes consistant à :
prévoir le substrat de support (410) ; et
fixer un joint flexible rectangulaire (310) sur le substrat de support (410) et couper une partie découpée (320) au niveau de chacune des quatre parties de coin (315) du joint flexible (310) le long d'une direction diagonale.

8. Procédé selon la revendication 7, dans lequel la partie découpée (320) est une partie découpée linéaire qui est formée en découpant le joint flexible (310) sur une partie s'étendant à partir de la pointe de coin interne (321) de la partie de coin (315) respective jusqu'à une position (322) dans la direction diagonale, qui est positionnée de sorte qu'une quantité selon laquelle le bord interne (310e) du joint flexible (310) est plié correspond à une longueur prédéterminée.

9. Procédé selon la revendication 8, dans lequel la longueur prédéterminée correspondant à la quantité selon laquelle le bord interne (310e) du joint flexible (310) est plié, est déterminée en fonction d'une hauteur de montage latérale du module d'affichage (450).
